# FASCICULE DE BREVET EUROPEEN

(11) **EP 0 677 762 B1**
(45) Date de publication et mention de la délivrance du brevet: **23.06.1999**
(21) Numéro de dépôt: 95400792.8
(22) Date de dépôt: 07.04.1995
(51) Int. Cl.: G02B 23/12, G02B 23/18

(54) **Lunette de vision binoculaire et son procédé de montage**
Binokulares Fernrohr und dessen Montageverfahren
Binocular telescope and mounting method

(30) Priorité: 12.04.1994 FR 9404324
(43) Date de publication de la demande: 18.10.1995
(73) Titulaire: SFIM INDUSTRIES, 91300 Massy (FR)
(72) Inventeur: Quint, Jean-François, F-95200 Sarcelles (FR); Saint-Sevin, Michel, F-93220 Gagny (FR); Savoye, Daniel, F-21000 Dijon (FR); Guettier, Denis, F-77410 Charny (FR)
(74) Mandataire: Michelet, Alain

(56) Documents cités:
- EP-A- 0 042 324
- GB-A- 2 065 325

## Description

La présente invention concerne une lunette de vision binoculaire asymétrique comportant, d'une part, successivement alignés sur un premier axe optique : un objectif unique, un tube à intensification de luminance associé, un séparateur optique d'images semi-réfléchissant et un premier oculaire, et d'autre part, disposé sur un second axe optique, parallèle au premier et définissant avec celui-ci un plan horizontal, un second oculaire qui est associé au séparateur optique d'images par un système optique transporteur d'images.

Cette lunette est destinée à l'observation diurne en cas de très faible luminosité ou nocturne.

Une lunette de ce type est déjà connue par le brevet français FR-2.484.658 et permet l'observation binoculaire d'une seule image réelle ou aérienne avec une courte focale. L'encombrement et le poids réduits d'une telle lunette par rapport à celles précédemment connues permettent la réalisation d'un instrument léger et portable d'un prix de revient économique. C'est ainsi que ce type de lunette est destiné à être tenu à la main ou fixé sur la tête d'un utilisateur par l'intermédiaire d'un support, par exemple d'un casque, à des fins d'utilisations civiles ou militaires.

D'une manière générale, les lunettes de vision nocturnes sont donc constituées :
- d'un objectif qui forme une image de la scène observée sur la photocathode d'un tube à intensification de luminance,
- dudit tube à intensification de luminance,
- d'un oculaire placé devant l'écran de sortie dudit tube à intensification de luminance,
- dans le cas des lunettes à binoculaire, d'un dispositif de séparation et de transport d'images apte à créer des images observables par les deux yeux de l'utilisateur.

Divers types de lunettes de vision nocturnes sont aujourd'hui en service et se différencient les uns des autres par le nombre, le type et la disposition du ou des tubes à intensification de lumière d'une part, et par le dispositif de séparation et de transport d'images d'autre part.

Ces dispositifs présentent tous un ou plusieurs des inconvénients plus ou moins importants tels que :
- leur prix trop élevé lorsqu'ils possèdent deux tubes à intensification de lumière ou, lorsque pour des raisons de compacité, le chemin optique est complexe,
- leur poids trop élevé,
- le centre de gravité situé très en avant de la position des yeux entraînant une fatigue excessive de l'utilisateur,
- les champs d'observation des deux yeux dissymétriques ou limités,
- les réglages complexes,
- le système ne dégage pas une place suffisante pour le nez de l'observateur.

Le document GB-A-2.065.325 décrit un dispositif de vision binoculaire dans lequel une image est observée directement avec un premier oculaire au moyen d'un séparateur de faisceaux et indirectement avec un second oculaire au moyen d'un système d'imagerie optique. Ce dernier comporte notamment un prisme pentagonal en toit ou prisme de Goulier.

La présente invention, pour rester économique, n'utilise qu'un seul tube à intensification de luminance et apporte une solution nouvelle au problème de la séparation et du transport d'image. Cette solution, tout en restant très économique, supprime tous les inconvénients d'emploi des matériels existants aujourd'hui. Elle présente en outre l'avantage d'offrir à l'observateur un champ de vision très agrandi, proche du champ normal de vision de l'oeil. Ce dernier point donne à l'utilisateur une très grande impression de confort et lui permet d'éviter plus facilement les obstacles lorsqu'il se déplace.

Il faut souligner ici que la principale difficulté à résoudre pour effectuer la séparation et le transport d'images réside dans le fait qu'il faut observer un écran de faible diamètre, tels qu'ils sont actuellement disponibles, sous un grand angle. Ceci nécessite d'utiliser des oculaires dont la distance focale est légèrement supérieure au diamètre de l'écran.

Lorsque la configuration retenue pour l'ensemble du dispositif est symétrique, c'est-à-dire que le tube à intensification de lumière est placé en position centrale, à égale distance des axes des oculaires, il n'est pas possible, du fait de la distance séparant les deux yeux, de séparer et de transporter l'image à l'aide de simples miroirs en plaçant le tube le plus près possible des yeux. Il est au contraire nécessaire d'introduire des dispositifs optiques de transport et, éventuellement, de redressement d'images lourds et encombrants.

Lorsque la configuration retenue est dissymétrique, le tube est alors placé dans l'axe de l'un des yeux et peut être directement observé par cet oeil au travers d'un oculaire. Il est relativement facile d'obtenir, pour cet oeil, un champ de vision de 40 à 50°. Dans ce cas, la séparation d'images se fait par un prisme ou un miroir semi-transparent pour envoyer l'image vers l'autre oeil.

Pour que l'autre oeil puisse observer cette image avec le même angle apparent que le premier, il faut utiliser un oculaire de même focale placé de telle sorte que l'image à observer soit dans son plan focal. Compte tenu de l'écart existant entre les deux yeux de l'observateur, il n'est pas possible de placer cet oculaire directement devant le deuxième oeil.

Une solution, objet d'un brevet français FR-2.484.658, consiste à placer ce second oculaire à proximité du prisme de séparation des images et donc assez loin du deuxième oeil. Cette solution efficace a néanmoins l'inconvénient de réduire le champ total vu par ledit deuxième oeil, malgré l'utilisation de prismes de verre placés sur tout le trajet pour réduire artificiellement la distance optique.

La solution avait également le défaut d'introduire un poids important dans le système et de ne pas laisser beaucoup de place pour le nez de l'utilisateur.

La présente invention apporte une solution beaucoup plus efficace à ce problème de transport d'images. Elle permet la réalisation d'une lunette plus légère et procure un champ de vision agrandi et identique pour les deux yeux et laisse plus de place pour le passage du nez de l'utilisateur.

Elle est basée sur une configuration dissymétrique qui place le tube à intensification de luminance et l'objectif le plus près possible de l'un des oculaires et est donc la plus favorable pour rapprocher le centre de gravité de l'ensemble de la tête de l'utilisateur.

Son principe consiste à réaliser la séparation et le transport d'images par un chemin allongé à l'aide de miroirs qui vont créer un retournement d'images et d'utiliser cet allongement pour introduire un transport et un redressement d'images à l'aide d'une combinaison de lentilles légères.

On appelle ici miroir, un système réflecteur à réflexion unique, ce qui en plus des miroirs classiques englobe les prismes.

L'invention concerne donc une lunette de vision binoculaire asymétrique comportant, d'une part, successivement alignés sur un premier axe optique : un objectif unique, un tube à intensification de luminance associé, un séparateur optique d'images semi-réfléchissant et un premier oculaire, et d'autre part, disposé sur un second axe optique, parallèle au premier et définissant avec celui-ci un plan horizontal, un second oculaire qui est associé au séparateur optique d'images par un système optique transporteur d'images.

Cette lunette est telle que définie dans la revendication 1.

Une telle configuration permet de remédier à tous les inconvénients précités et de dégager l'espace situé entre les oculaires, qui est mis judicieusement à profit pour un passage aisé du nez de l'utilisateur.

La présente invention concerne également les caractéristiques ci-après considérées isolément ou selon toutes leurs combinaisons techniquement possibles :
- le séparateur optique d'images est un cube ou une lame semi-réfléchissante,
- la lunette renferme une source d'énergie électrique apte à alimenter une diode électroluminescente destinée à l'éclairage nocturne, ainsi que le tube à intensification de luminance, par l'intermédiaire d'une carte électronique unique assurant à la fois la conversion de la tension d'alimentation, une sécurité antiéblouissement dudit tube et la mise hors circuit de l'ensemble par un interrupteur extérieur associé,
- la source d'énergie électrique a indifféremment une tension égale à 1,5 V ou 3 V,
- l'interrupteur est actionnable manuellement ou automatiquement par contact ou non avec un support de la lunette, selon que celle-ci est en service ou hors service, par basculement sur une articulation constituant une interface par rapport au support,
- elle comporte une diode électroluminescente formant un éclairage d'appoint commandé par un interrupteur comportant une position neutre, une position dans laquelle est assuré un contact permanent en l'absence d'un rappel volontaire, une position dans laquelle est assuré un contact intermittent à rappel automatique,
- la lunette est constituée, d'une part, d'un boîtier arrière renfermant l'ensemble des éléments optiques suivants : le séparateur optique d'images, les trois miroirs de renvoi et le véhicule optique constituant le système optique transporteur d'images, ainsi que les premier et second oculaires et, d'autre part, d'un boîtier avant supportant le tube à intensification de luminance, l'objectif et tous les composants électriques ou électroniques suivants : l'interrupteur, la source d'énergie électrique, la diode, le dispositif de sécurité du tube et la carte et les voyants de sécurité, ainsi que les moyens d'articulation constituant une interface par rapport au support,
- les boîtiers arrière et avant sont obtenus par moulage haute pression d'une matière plastique, de manière monobloc, indépendamment l'un de l'autre et assemblés ultérieurement, après mise en place de leurs éléments constitutifs respectifs, par rapport à un plan de joint commun étanche.

L'invention concerne également un procédé de montage d'une lunette de vision nocturne binoculaire, caractérisé en ce qu'au moins le séparateur optique d'images, les premier et second miroirs et le véhicule optique constituant ensemble conjointement le transporteur optique d'images, sont préalablement disposés provisoirement dans un gabarit, selon un positionnement précis déterminé en vue de recevoir, au cours d'une opération ultérieure, l'application du boîtier arrière pour y être insérés et retenus par tout moyen dans le même positionnement, le troisième miroir et les oculaires étant insérés au cours de la même opération ou ultérieurement.

L'invention sera encore illustrée, sans être aucunement limitée, par la description qui suit, faite en référence aux dessins annexés, sur lesquels :
- la Figure 1 représente, en perspective vue de 3/4 face, une lunette de vision binoculaire selon l'invention ;
- la Figure 2 représente, en perspective, une lunette de vision binoculaire selon l'invention, vue de 3/4 arrière ;
- la Figure 3 représente, en perspective, le schéma optique de la lunette selon les Figures 1 et 2 ;

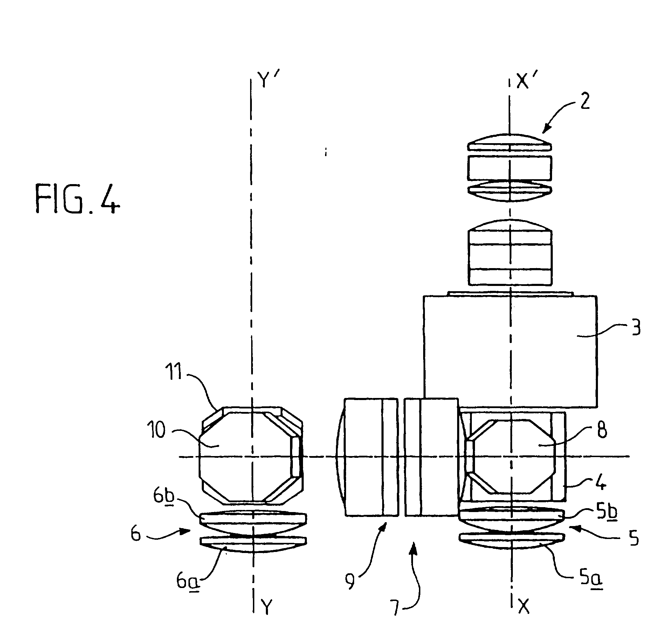

- la Figure 4 représente, en vue de dessus, le schéma optique de la lunette selon les Figures 1 et 2 ;

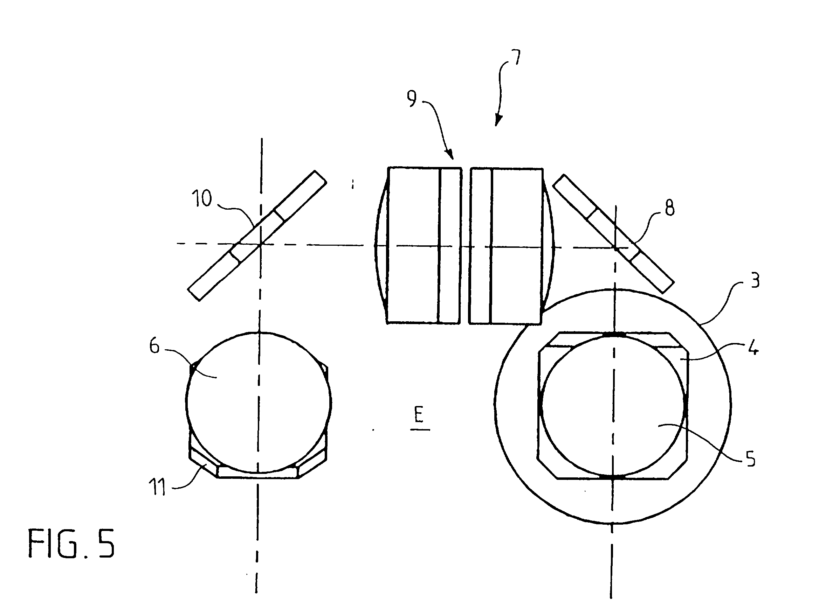

- la Figure 5 représente, en vue arrière, le schéma optique de la lunette selon les Figures 1 et 2.

La lunette de vision 1 désignée globalement sur les Figures, est asymétrique et comporte, d'une part, successivement alignés sur un premier axe optique XX' :
- un objectif unique 2,
- un tube à intensification de luminance associé 3,
- un séparateur optique d'images semi-réfléchissant 4,
- un premier oculaire droit 5,
et d'autre part, disposé sur un second axe optique YY', parallèle au premier XX', et définissant avec celui-ci un plan horizontal P :
- un second oculaire gauche 6 qui est associé au séparateur optique d'images 4 par un système optique transporteur d'images 7 globalement désigné.

Bien entendu, le plan P défini par les axes optiques XX' et YY' est qualifié d'horizontal par rapport à sa position lors de l'usage le plus habituel de la lunette. Toutes les autres directions seront définies par rapport à cette même position.

Un exemple d'un tel schéma optique est connu par le brevet français FR-2.484.658, auquel on se reportera pour de plus amples détails de réalisation.

Selon l'invention, le système optique transporteur d'images 7 comporte successivement, partant du séparateur optique 4 :
- un premier miroir de renvoi 8,
- un véhicule optique 9,
- un second miroir de renvoi 10,
- un troisième miroir de renvoi 11.

Ces éléments constitutifs dudit système optique transporteur d'images 7 sont disposés de manière à définir un chemin optique partant du même séparateur optique 4 et comportant, successivement, un tronçon d'axe vertical a, un tronçon d'axe horizontal b et un tronçon d'axe vertical c. Ces trois tronçons a, b, c définissent ensemble un U renversé en forme de pont situé dans un plan vertical et perpendiculaire aux deux axes optiques parallèles XX' et YY' précités, pour délimiter un espace libre E entre les deux oculaires droit 5 et gauche 6, destiné au passage du nez de l'utilisateur.

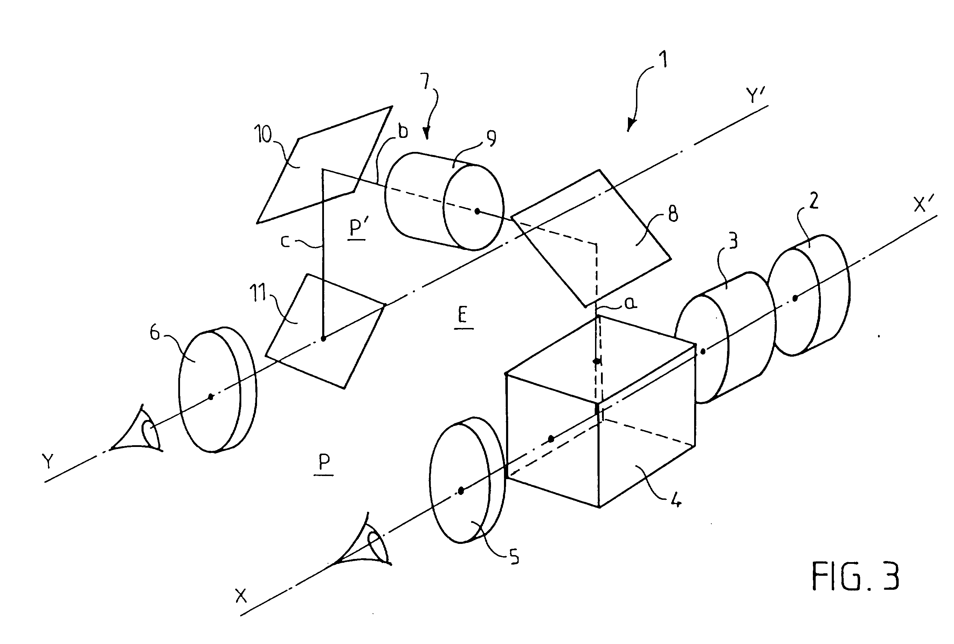

La Figure 3 illustre particulièrement le chemin optique qui vient d'être défini et sur lequel le miroir 8 est disposé au point de rencontre des tronçons a et b selon une inclinaison de 45° vers le second miroir 10, lui-même disposé au point de rencontre des tronçons b et c selon une inclinaison de 45° vers le premier miroir 8.

Le véhicule optique 9 est situé sur le tronçon horizontal b entre les miroirs de renvoi 8 et 10.

Le troisième miroir 11 est situé au point de rencontre du tronçon vertical c et de l'axe optique YY' et est incliné à 45° vers l'oculaire gauche 6, de manière à réfléchir vers celui-ci les informations optiques provenant du miroir de renvoi 10.

Le véhicule optique 9 permet ainsi de ramener l'image captée par l'objectif 2 et véhiculée par le tube 3, le séparateur optique 4 et le premier miroir 8, au foyer de l'oculaire gauche 6, en la retournant.

L'image est alors redressée par le jeu de miroirs 8, 10, 11 qui, associé à la surface semi-réfléchissante du séparateur, constituent l'équivalent d'un Porro de deuxième espèce.

Le dispositif "Porro" est un système redresseur présentant l'avantage d'être compact, et constitué de deux prismes croisés à réflexion totale qui relient le faisceau lumineux entre l'objectif et l'oculaire.

Cette disposition libérant un espace important pour le nez de l'utilisateur permet de placer les oculaires à proximité immédiate de ses yeux.

De plus, le trajet optique séparant l'image fournie par le tube 3 et le second oculaire, décalé, est plus long que dans les systèmes connus et permet d'utiliser un véhicule optique 9 de grande ouverture et de moindre complexité, facilitant ainsi le transport d'un champ image important.

Au-delà des avantages déjà cités, l'agencement selon l'invention permet, en outre, d'obtenir une grande pupille de sortie des oculaires droit 5 et gauche 6. Cela donne une tolérance du positionnement des pupilles des yeux de l'utilisateur par rapport auxdits oculaires, ce qui rend inutile leur réglage d'écartement.

Selon une autre caractéristique de l'invention, le séparateur optique d'images 4 est un cube, mais il peut également s'agir d'une lame séparatrice.

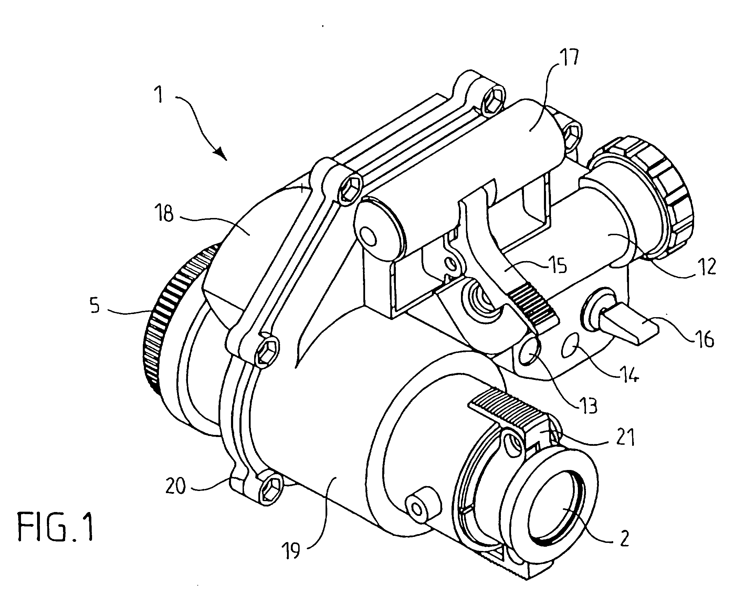

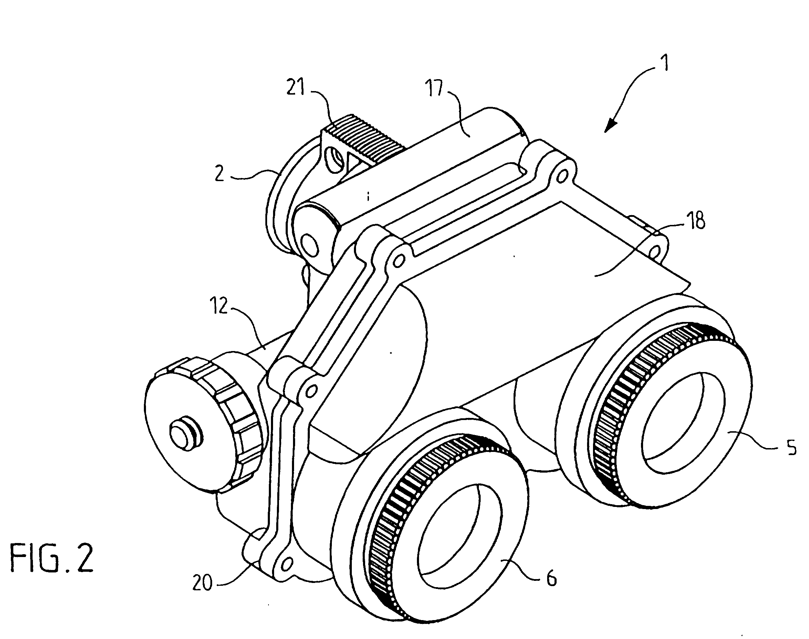

Comme le montre les Figures 1 et 2, la lunette 1 comporte également une source d'énergie électrique constituée indifféremment par une pile d'une tension de 1,5 volts ou 3 volts (non visible sur les Figures), disposée dans un logement 12 et apte à alimenter le tube à intensification de luminance 3, ainsi qu'une diode électroluminescente 13 destinée à l'éclairage nocturne.

Cette alimentation s'effectue par l'intermédiaire d'une carte électronique unique (non représentée) qui assure, à la fois, la conversion de la tension d'alimentation, une sécurité 14 dudit tube 3 et la mise hors circuit de l'ensemble et des différentes sécurités. Cette dernière opération s'effectue par l'intermédiaire d'un interrupteur extérieur 15 associé. Un autre interrupteur 16 est également prévu pour commander, indépendamment, la mise en oeuvre de la diode électroluminescente 13.

En ce qui concerne l'interrupteur 15 de mise hors circuit de l'ensemble, celui-ci est actionnable manuellement ou encore automatiquement par contact ou non avec un support de la lunette, un casque, par exemple, selon que celle-ci est en service ou hors service.

Cette commande automatique s'effectue par basculement sur une articulation 17 constituant une interface par rapport au support.

La diode électroluminescente 13 est une source lumineuse d'appoint permettant de faciliter la vision rapprochée.

Selon un exemple préférentiel de l'invention, l'interrupteur 16 comporte une position neutre, une position dans laquelle est assuré un contact permanent en l'absence d'un rappel volontaire, une position dans laquelle est assuré un contact intermittent à rappel automatique.

Selon une autre caractéristique de l'invention, la lunette 1 est constituée, d'une part, d'un boîtier arrière 18 renfermant l'ensemble des éléments optiques suivants : le séparateur optique d'images 4, les trois miroirs de renvoi 8, 10, 11 et le véhicule optique 9 constituant le système optique transporteur d'images 7, ainsi que les premier et second oculaires 5 et 6 à l'exclusion du tube à intensification de luminance 3 et de l'objectif 2.

Le boîtier avant 19 supporte également l'interrupteur 16 de commande de la diode 13.

La lunette 1 est constituée, d'autre part, d'un boîtier avant 19 supportant l'objectif 2 et le tube à intensification de luminance 3, ainsi que tous les composants électriques ou électroniques suivants : l'interrupteur 15, la source d'énergie électrique, la diode 13, le dispositif de sécurité 14 du tube 3 et la carte, les voyants de sécurité, ainsi que les moyens d'articulation 17 constituant une interface par rapport au support.

Le boîtier avant 19 supporte également l'interrupteur 16 de commande de la diode 13.

Un organe 21 commande la mise au point de l'objectif 2.

Avantageusement, les boîtiers arrière 18 et avant 19 sont obtenus par moulage haute pression d'une matière plastique, de manière monobloc, indépendamment l'un de l'autre et assemblés ultérieurement, après mise en place de leurs éléments constitutifs respectifs, par rapport à un plan de joint commun 20 étanche.

L'invention concerne également un procédé de montage de la lunette 1 qui est particulièrement avantageux.

Celui-ci est remarquable en ce qu'au moins le séparateur optique d'images 4, les premier et second miroirs 8, 10 et le véhicule optique 9 constituant conjointement le transporteur optique d'images 7, sont préalablement disposés provisoirement dans un gabarit, selon un positionnement précis déterminé en vue de recevoir, au cours d'une opération ultérieure, l'application du boîtier arrière 18 pour y être insérés et retenus par tout moyen dans le même positionnement, le troisième miroir 11 et les oculaires 5 et 6 étant insérés au cours de la même opération ou ultérieurement.

L'alignement des éléments optiques est réalisé par rapport au gabarit qui est usiné avec précision. Ils sont ensuite fixés, par exemple collés sur le boîtier, sans que cet alignement ne soit modifié et sans que le boîtier ne nécessite une précision d'usinage ou de positionnement relatif des faces de support des éléments optiques, comparable à celle du gabarit. Le gabarit unique pouvant être utilisé pour la fabrication de nombreuses lunettes, cette simplification est importante.

Il est à préciser ici que le miroir 11 peut éventuellement être monté ultérieurement car l'on dispose de plus de tolérance sur sa précision de positionnement.

Les oculaires 5 et 6 sont préférentiellement formés de deux lentilles 5a, 5b et 6a, 6b, dont celles extérieures 5a, 6a sont en verre afin de mieux résister aux rayures, et celles intérieures 5b, 6b sont moulées en matière plastique de manière à les rendre asphériques plus facilement et plus légères que des lentilles en verre.

Les signes de référence insérés après les caractéristiques techniques mentionnées dans les revendications, ont pour seul but de faciliter la compréhension de ces dernières, et n'en limitent aucunement la portée.

## Revendications

1. Lunette de vision binoculaire asymétrique comportant, d'une part, successivement alignés sur un premier axe optique (XX'): un objectif unique (2), un tube à intensification de luminance (3) associé, un séparateur optique d'images semi-réfléchissant (4) et un premier oculaire (5), et d'autre part, disposé sur un second axe optique (YY'), parallèle au premier et définissant avec celui-ci un plan horizontal (P), un second oculaire (6) qui est associé au séparateur optique d'images (4) par un système optique transporteur d'images (7), ce dernier (7) comportant un premier (8), un deuxième (10) et un troisième (11) miroirs de renvoi et un véhicule optique (9) disposés de manière à définir un chemin optique partant du séparateur (4), caractérisée en ce que ledit chemin optique (7) comporte successivement un tronçon d'axe vertical (a), un tronçon d'axe horizontal (b) comportant ledit véhicule optique (9) et un tronçon d'axe vertical (c) définissant un U renversé en forme de pont situé dans un plan vertical (P') et perpendiculaire aux deux axes optiques parallèles (XX' et YY'), pour délimiter un espace libre entre les deux oculaires (5,6).

2. Lunette selon la revendication 1, caractérisée en ce que le séparateur optique d'images (4) est un cube.

3. Lunette selon la revendication 1, caractérisée en ce que le séparateur optique d'images (4) est une lame semi-réfléchissante.

4. Lunette selon l'une quelconque des revendications 1, à 3, caractérisée par une source d'énergie électrique (12) apte à alimenter une diode électroluminescente (13) destinée à l'éclairage nocturne, ainsi que le tube à intensification de luminance (3), par l'intermédiaire d'une carte électronique unique assurant à la fois la conversion de la tension d'alimentation, une sécurité (14) dudit tube (3) et la mise hors circuit de l'ensemble par un interrupteur extérieur associé (15).

5. Lunette selon la revendication 4, caractérisée en ce que la source d'énergie électrique a indifféremment une tension égale à 1,5V ou 3 V.

6. Lunette selon l'une des revendications 4 ou 5, caractérisée en ce que l'interrupteur (15) est actionnable manuellement ou automatiquement par contact ou non avec un support de la lunette (1), selon que celle-ci est en service ou hors service, par basculement sur une articulation (17) constituant une interface par rapport au support.

7. Lunette selon la revendication 6, caractérisée en ce qu'elle comporte une diode électroluminescente formant un éclairage d'appoint commandé par un interrupteur (15) qui comporte une position neutre, une position dans laquelle est assurée un contact permanent en l'absence d'un rappel volontaire, une position dans laquelle est assuré un contact intermittent à rappel automatique.

8. Lunette selon l'une quelconque des revendications 1 à 7, caractérisée en ce qu'elle est constituée, d'une part, d'un boîtier arrière (18) renfermant l'ensemble des éléments optiques suivants: le séparateur optique d'images (4), les trois miroirs de renvoi (8, 10, 11), et le véhicule optique (9) constituant ensemble le système optique transporteur d'images (7), ainsi que les premier et second oculaires (5 et 6) à l'exclusion du tube à intensification de luminance (3) et de l'objectif (2) et, d'autre part, d'un boîtier avant (19) supportant le tube à intensification de luminance (2) et l'objectif (3), ainsi que tous les composants électriques ou électroniques suivants: l'interrupteur (15), la source d'énergie électrique, la diode (13), le dispositif de sécurité (14) du tube (13) et la carte et les voyants de sécurité, ainsi que les moyens d'articulation (17) constituant une interface par rapport au support.

9. Lunette selon la revendication 8, caractérisée en ce que les boîtiers arrière (18) et avant (19) sont obtenus par moulage haute pression d'une matière plastique, de manière monobloc, indépendamment l'un de l'autre et assemblés ultérieurement, après mise en place de leurs éléments constitutifs respectifs, par rapport à un plan de joint commun (20) étanche.

10. Procédé de montage d'une lunette de vision nocturne binoculaire selon l'une des revendications précédentes, caractérisé en ce qu'au moins le séparateur optique d'images (4), les premier et second miroirs (8, 10) et le véhicule optique (9) ensemble constituant conjointement le transporteur optique d'images (7), sont préalablement disposés provisoirement dans un gabarit, selon un positionnement précis déterminé en vue de recevoir, au cours d'une opération ultérieure, l'application du boîtier arrière (18) pour y être insérés et retenus par tout moyen dans le même positionnement, le troisième miroir (11) et les oculaires (5 et 6) étant insérés au cours de la même opération ou ultérieurement.

## Patentansprüche

1. Asymmetrisches binokulares Fernglas, das einerseits auf einer ersten optischen Achse (XX') hintereinander angeordnet aufweist: ein einzelnes Objektiv (2), eine diesem zugeordnete Lichtverstärkungsröhre (3), einen semi-reflektierenden optischen Bildseparator (4) und ein erstes Okular (5); und das andererseits auf einer parallel zur ersten Achse verlaufenden und mit dieser eine horizontale Ebene (P) bildenden zweiten optischen Achse (YY') aufweist: ein mit dem optischen Bildseparator (4) durch ein optisches Bildleitsystem (7) verbundenes zweites Okular (6), wobei das Bildleitsystem (7) einen ersten (8), einen zweiten (10) und einen dritten Umlenkspiegel (11) sowie eine optische Einrichtung (9) aufweist, die zur Bildung eines vom Separator (4) ausgehenden optischen Pfades angeordnet sind, dadurch gekennzeichnet, daß der optische Pfad (7) nacheinander einen vertikalen Achsabschnitt (a), einen horizontalen Achsabschnitt (b), der die optische Einrichtung (9) umfaßt, und einen vertikalen Achsenabschnitt (c) aufweist, die ein brückenförmiges umgekehrtes U bilden, das zum Begrenzen eines freien Raumes zwischen den beiden Okularen (5, 6) in einer vertikalen Ebene (P') und senkrecht zu den beiden parallelen optischen Achsen (XX' und YY') angeordnet ist.

2. Fernglas nach Anspruch 1, dadurch gekennzeichnet, daß der optische Bildseparator (5) ein Würfel ist.

3. Fernglas nach einem der Ansprüche 1 oder 2, dadurch gekennzeichnet, daß der optische Bildseparator (4) eine semi-reflektierende Platte ist.

4. Fernglas nach einem der Ansprüche 1 bis 3, gekennzeichnet durch eine Stromquelle (12), die eine elektroluminiszente Diode (13) für die Nachtbeleuchtung sowie die Lichtverstärkungsröhre (3) über eine einzelne elektronische Karte speist, die gleichzeitig die Versorgungsspannung umwandelt, eine Sicherung (14) der Röhre (3) und das Abschalten der Einheit durch einen zugehörigen äußeren Schalter (15) gewährleistet.

5. Fernglas nach Anspruch 4, dadurch gekennzeichnet, daß die Stromquelle stets eine Spannung von 1,5 V oder 3 V hat.

6. Fernglas nach einem der Ansprüche 4 oder 5, dadurch gekennzeichnet, daß der Schalter (15) manuell oder automatisch mit oder ohne Kontakt mit einem Halter des Fernglases (1) durch Schwenken um ein eine Schnittstelle mit dem Halter bildendes Gelenk (17) betätigbar ist, wodurch das Fernglas ein- oder ausgeschaltet ist.

7. Fernglas nach Anspruch 6, dadurch gekennzeichnet, daß es eine elektrolumiszente Diode aufweist, die eine Zusatzbeleuchtung bildet, welche über einen Schalter (15) betätigt wird, der eine Neutralstellung, eine Stellung, in der ohne beabsichtigte Rückstellung des Schalters ein permanenter Kontakt erfolgt, und eine Stellung aufweist, in der ein intermittierender Kontakt mit automatischer Rückstellung erfolgt.

8. Fernglas nach einem der Ansprüche 1 bis 7, dadurch gekennzeichnet, daß es einerseits aus einem hinteren Gehäuse (18) besteht, das die folgenden optischen Elemente umschließt: den optischen Bildseparator (4), die drei Umlenkspiegel (8, 10, 11) und die optische Einrichtung (9), welche die Gesamtheit des optischen Bildleitsystems (7) bilden, sowie das erste und das zweite Okular (5 und 6) mit Ausnahme der Lichtverstärkungsröhre (3) und des Objektivs (2), und andererseits aus einem vorderen Gehäuse (19), welches die Lichtverstärkungsröhre (3) und das Objektiv (2) stützt, und die folgenden elektrischen oder elektronischen Teile aufweist: den Schalter (15), die Stromquelle, die Diode (13), die Sicherungsvorrichtung (14) der Röhre (3), die Karte und die Sicherheitsanzeigeeinrichtungen sowie die eine Schnittstelle mit dem Halter bildende Gelenkeinrichtung (17).

9. Fernglas nach Anspruch 8, dadurch gekennzeichnet, daß das hintere (18) und das vordere Gehäuse (19) durch Spritzgießen eines Kunststoffs im Blockguß jeweils einstückig voneinander unabhängig hergestellt sind und, nachdem ihre jeweiligen Bestandteile montiert sind, entlang einer dichten gemeinsamen Verbindungsebene (20) anschließend zusammengesetzt sind.

10. Verfahren zum Montieren eines binokularen Nachtsichtglases nach einem der vorhergehenden Ansprüche, dadurch gekennzeichnet, daß wenigstens der optische Bildseparator (4), der erste und der zweite Spiegel (8, 10) und die optische Einrichtung (9), die zusammen das optische Bildleitsystem (7) bilden, vorab vorübergehend in einer Schablone entsprechend einer genauen Positionierung angeordnet werden, die im Hinblick auf das in einem späteren Schritt erfolgende Ansetzen des hinteren Gehäuses (18) derart ausgelegt ist, daß die Teile in dieses eingeführt werden können und darin durch beliebige Mittel in der gleichen Position gehalten werden, wobei der dritte Spiegel (11) und die Okulare (5 und 6) im Verlauf des gleichen Vorgangs oder später eingesetzt werden.

## Claims

1. An asymmetrical binocular viewing device comprising on the one hand, aligned in succession on a first optical axis (XX') : a single objective (2), a related luminance intensifier tube (3), a semi-reflecting optical image splitter (4) and a first ocular (5) and on the other hand, arranged on a second optical axis (YY'), parallel to the first and describing with the former a horizontal plane (P), a second ocular (6), which is related to the optical image splitter (4) by an optical image transmitting system (7), said latter (7) comprising a first (8), a second (10) and a third (11) transmission mirrors and an optical vehicule (9) arranged so that an optical path can be defined, starting from the optical splitter (4) characterised in that said optical path (7) comprises successively, a vertical axis section (a), a horizontal axis section (b) comprising said optical vehicule (9) and a vertical axis section ( c ) describing a U turned upside down, in the shape of a bridge located on a vertical plane (P') and perpendicular to both parallel optical axes (XX' and YY'), in order to define a free space between both oculars (5,6).

2. A viewing device according to one of claims 1 or 2, characterized in that the optical image splitter (4) is a cube.

3. A viewing device according to one of claims 1 or 2, characterized in that the optical image splitter (4) is a semi-reflecting blade.

4. A viewing device according to any one of claims 1 to 3, characterized by an electrical energy source (12) capable of supplying a light-emitting diode (13) designed for night-time lighting, as well as the luminance intensifier tube (3), via a single electronic board ensuring at the same time : conversion of the supply voltage, safety (14) of the said tube (3) and disconnection of the assembly via a related external switch (15).

5. A viewing device according to claim 4, characterized in that the voltage of the electrical energy source can be equal to 1.5 V or 3 V indifferently.

6. A viewing device acccording to one of claims 4 or 5, characterized in that the switch (15) can be actuated manually or automatically whereby contact is made or suppressed with the support of the viewing device (1), according to whether the said device in connected or disconnected, by toggling to an articulation (17) used as an interface in relation to the support.

7. A viewing device according to claim 6, characterized in that it comprises a light-emitting diode forming a make-up lighting system actuated by a switch (15) comprising a neutral position, a position in which there is a permanent contact in the absence of a voluntary return, a position in which there is an intermittent contact with automatic return.

8. A viewing device according to any one of claims 1 to 7, characterized in that it comprises on the one hand, a rear casing (18) containing all the following optical elements : the optical image splitter (4), the three transmission mirrors (8,10,11) and the optical vehicle (9) making up the optical image transmitting system (7), as well as the first and second oculars (5 and 6), with the exception of the luminance intensifier tube (3) and the objective (2) and, on the other hand, a front casing (19) supporting the luminance intensifier tube (2) and the objective (3), as well as all the following electric or electronic components : the switch (15), the electric energy source, the diode (13), the safety device (14) of the tube (13), the board and the safety light-indicators, as well as the articulation means (17) making up an interface in relation to the support.

9. A viewing device according to claim 8, characterized in that the rear (18) and front (19) casings are made of a high pressure moulded plastic material, to form a single piece, individually from one another and assembled at a later stage, after placement of their respective constitutive elements, in relation to a tight common joint plane (20).

10. An assembly process of a night-time binocular viewing device, according to any one of the preceding claims, characterized in that at least the optical image splitter (4), the first and second mirrors (8,10) and the optical vehicle (9) making up jointly the optical image transmitter (7), have been arranged previously and temporarily in a template, according to a very accurate positioning in order to accommodate the rear casing (18), at a later stage, so that the said various elements can be inserted and retained by any means in the same positioning, whereas the third mirror (11) and the oculars (5 and 6) are inserted during the same operation or at a later stage.
